# EUROPÄISCHE PATENTSCHRIFT

(11) **EP 4 073 185 B1**
(45) Veröffentlichungstag und Bekanntmachung des Hinweises auf die Patenterteilung: **10.01.2024**
(21) Anmeldenummer: 20816959.9
(22) Anmeldetag: 30.11.2020
(51) Int. Cl.: C09D 183/06, H01F 1/18, H01F 41/02

(54) **VERFAHREN ZUR HERSTELLUNG VON BESCHICHTETEN ELEKTROBÄNDERN UND BESCHICHTETES ELEKTROBAND**
METHOD OF PRODUCING COATED ELECTRIC STRIPS AND COATED ELECTRIC STRIP
PROCÉDÉ DE PRODUCTION DE BANDES ÉLECTRIQUES REVÊTUES ET BANDE ÉLECTRIQUE REVÊTUE

(30) Priorität: 12.12.2019 DE 102019134136
(43) Veröffentlichungstag der Anmeldung: 19.10.2022
(73) Patentinhaber: voestalpine Stahl GmbH, 4020 Linz (AT)
(72) Erfinder: FLUCH, Ronald, 4020 Linz (AT); BRAIDT, Roland, 4202 Hellmonsödt (AT)
(74) Vertreter: Lambsdorff & Lange Patentanwälte Partnerschaft mbB
(86) Internationale Anmeldenummer: PCT/EP2020/083866
(87) Internationale Veröffentlichungsnummer: WO 2021/115814

(56) Entgegenhaltungen:
- EP-A1- 3 206 213
- WO-A1-2018/167296
- WO-A1-2019/201788

## Beschreibung

Die Erfindung betrifft ein Verfahren zur Herstellung eines beschichteten Elektrobandes sowie ein beschichtetes Elektroband.

Beschichtete Elektrobänder werden in der Elektroindustrie verwendet und bilden dort das Ausgangsmaterial beim Bau von Elektrokernen, die in Generatoren, Elektromotoren, Transformatoren oder anderen elektrischen Geräten eingesetzt werden. Derartige Elektrokerne werden durch Zuschneiden des beschichteten Elektrobands in einzelne Blechlamellen, Stapeln der Blechlamellen und Verbinden (z.B. Verkleben) derselben zu einem Lamellenpaket hergestellt. Durch den Schichtaufbau wird das Auftreten von Wirbelströmen im Elektrokern weitgehend unterbunden, wodurch sich der Wirkungsgrad des Elektrokerns deutlich erhöht.

Je nach Anwendung werden Elektrobleche unterschiedlicher Stahllegierungen, weichmagnetischer Eigenschaften, Verlustleistungen, Dicken und anderer je nach Einsatzgebiet wichtigen Eigenschaften gewählt.

Es ist bereits bekannt, das Elektroband bei der Herstellung mit einer Backlackschicht zu überziehen. Als Backlackschichten werden Isolierlackschichten bezeichnet, die die elektrische Isolation der Elektrolamellen im Blechstapel sicherstellen und darüber hinaus klebefähig sind, d.h. zusätzlich zur Isolierung auch eine Verklebung der Elektrolamellen im Blechstapel ermöglichen. Backlackschichten enthalten einen Klebstoff, der beim Verklebeprozess (sogenanntes Verbacken der gestapelten Elektrolamellen zum Lamellenpaket) aktiviert wird und dem Lamellenpaket die benötigte Formstabilität verleiht.

Da die Backlackschichten das elektrisch wirksame Volumen eines Elektrokerns reduzieren, werden für einen hohen Wirkungsgrad möglichst dünne Schichtdicken angestrebt. Auf der anderen Seite muss die Schichtdicke ausreichend groß sein, um die erforderliche Isolationssicherheit über die Lebensdauer des Elektrokerns garantieren zu können.

Bestehende Beschichtungsanlagen bringen die Backlackschicht auf das gereinigte (gewaschene und gebürstete) blanke Elektroband auf. Die Backlackanhaftung wird durch die Reinigung des Elektrobands verbessert.

In der Praxis stellt die Kühlung der geklebten Lamellenpakete eine komplexe Problemstellung dar. Zahlreiche Lösungsansätze wurden in der Vergangenheit diskutiert, darunter der Einsatz von Kühlkanälen, Kühlmedien, usw. Eine konkrete, praxistaugliche Lösung ist bisher nicht bekannt. Schwierigkeiten bereitet insbesondere die Unterwanderung der Backlackschichten durch Feuchtigkeit infolge ungenügender Nasshaftung. Besonders bei höher legierten Elektrobändern kann eine ausreichende Haftung der Backlackschicht an dem Elektroband oft nicht garantiert werden.

Die Dokumente WO 2018/167296, EP 3 206 213 und WO 2019/201788 stellen den Stand der Technik bezüglich der Beschichtung und Vorbehandlung von Elektrobändern dar.

Eine der Erfindung zugrundeliegende Aufgabenstellung kann darin gesehen werden, ein Verfahren zur Herstellung eines beschichteten Elektrobands zu schaffen, welches Backlackbeschichtungen mit guter Nasshaftung und damit guter Kühlmittelbeständigkeit ermöglicht. Insbesondere soll das Verfahren einfach und kostengünstig durchführbar sein und weiterhin geringe Beschichtungsdicken ermöglichen.

Ein weiterer Aspekt einer Aufgabenstellung kann darin gesehen werden, ein Verfahren sowie ein damit hergestelltes Erzeugnis anzugeben, welche den bisherigen Herstellungsablauf beim Kunden (unter anderem das Zuschneiden der Lamellen und das Verbacken derselben zum formstabilen Lamellenpaket) möglichst unbeeinflusst lässt.

Die Aufgabenstellung wird durch die Merkmale der unabhängigen Ansprüche gelöst. Ausführungsbeispiele und Weiterbildungen sind Gegenstand der Unteransprüche.

Demnach umfasst ein Verfahren zur Herstellung eines beschichteten Elektrobandes ein Hydrolysieren einer Oberfläche eines gewalzten aluminiumlegierten Elektrobandes. Eine Vorbehandlungsschicht, die eine siliziumorganische Verbindung enthält, wird über der Oberfläche des gewalzten aluminiumlegierten Elektrobandes aufgetragen. Anschließend erfolgt ein Beschichten des mit der Vorbehandlungsschicht überzogenen gewalzten aluminiumlegierten Elektrobandes mit einer Backlackschicht.

Die siliziumorganische Verbindung wirkt als Haftvermittler zwischen dem aluminiumlegierten Elektroband und der Backlackschicht. Insbesondere erhöht sie die Nasshaftung der Backlackschicht an der Oberfläche des gewalzten aluminiumlegierten Elektrobandes. Dadurch wird die Unterwanderungsneigung verringert und die Kühlmittelbeständigkeit im späteren Produkt (Lamellenpaket) sichergestellt. Erreicht wird dies dadurch, dass die siliziumorganische Verbindung sowohl mit dem Backlack als auch mit der hydrolysierten Oberfläche des gewalzten aluminiumlegierten Elektrobandes kovalente Bindungen ausbilden kann.

Durch die gezielte Hydrolyse der Oberfläche des gewalzten aluminiumlegierten Elektrobandes wird eine oberflächenangrenzende AlN-Schicht des Elektrobandes in eine definierte Al (OH)₃-Oberfläche umgewandelt. Diese Al (OH)₃-Oberfläche ist ideal für die kovalente Anbindung an eine (erste) funktionelle Gruppe der siliziumorganischen Verbindung. Das heißt, der erhöhten Nasshaftung der Backlackschicht liegt unter anderem das Zusammenwirken der (zumindest teilweise) hydrolysierten Oberfläche des aluminiumlegierten Elektrobandes mit den chemischen Eigenschaften der siliziumorganischen Verbindung zugrunde. Dabei kann eine Hydrolysierung der gesamten Elektrobandoberfläche, also eine vorzugsweise vollflächige Hydrolysierung erfolgen, da sie die Bildung von kovalenten Bindungen zwischen der Elektrobandoberfläche und der siliziumorganischen Verbindung über die gesamte Elektrobandoberfläche ermöglicht.

Vorzugsweise handelt es sich bei der siliziumorganischen Verbindung um Organosilane. Organosilane, die auch als organofunktionelle Silane bezeichnet werden, sind hybride Verbindungen, welche die anorganische Funktionalität eines Alkylsilikates mit der Funktionalität einer reaktiven organischen Gruppe verbinden. Diese besondere Eigenschaft ermöglicht ihren Einsatz als molekulare Brücken zwischen der (anorganischen) Oberfläche des aluminiumlegierten Elektrobandes und dem (organischen) Backlack.

Die siliziumorganische Verbindung kann ferner eine Substanz aus der Gruppe der Organosilanole, Siloxane oder der Silikone sein.

Zur Erzielung der hydrolysierbaren Oberfläche des Elektrobandes kann beim Glühen des Elektrobandes der Taupunkt im Bereich von -35°C bis -60°C, insbesondere tiefer als -45°C eingestellt werden. Durch die Einstellung eines tiefen Taupunktes (d.h. einer trockenen Umgebung durch eine Glühatmosphäre mit niedrigem H₂O Gehalt) werden günstige Voraussetzungen dafür geschaffen, dass ausreichend AlN an der Oberfläche des Elektrobandes für die Hydrolyse zur Verfügung steht.

Ferner kann eine Glühendtemperatur im Bereich von 1000°C bis 1200°C, insbesondere größer als 1100°C eingestellt werden. Die Glühendtemperatur beeinflusst ebenfalls die Konkurrenz zwischen oberflächlicher Oxidierung und oberflächlicher Nitridierung des Al-haltigen Elektrobandes. Je höher die Glühendtemperatur und je niedriger der Taupunkt, desto mehr AlN steht an der Oberfläche für die Hydrolysierung zur Verfügung.

Die Vorbehandlungsschicht kann beispielsweise aus einer Zusammensetzung enthaltend 1,0%wt bis 3,0%wt Organosilan (z.B. 3-Glycidyloxypropyltrimethoxysilan), 0,5%wt bis 2,0%wt Co-Solvens (z.B. Butylglycol), 0,05%wt bis 0,3%wt Tensid (z.B. Ligaphob N90), der Rest ein organisches oder anorganisches Lösungsmittel und/oder Wasser bestehen.

Die Vorbehandlungsschicht kann ferner ein filmbildendes Harz (sogenannter Filmbildner), z.B. 0,1%wt bis 2,0%wt Phenoxydispersion, enthalten. Dadurch können die Schichteigenschaften der Vorbehandlungsschicht beim Auftragen und Trocknen günstig beeinflusst werden. Es ist aber auch möglich, die Vorbehandlungsschicht ohne einen Filmbildner aufzutragen.

Die Schichtdicke der getrockneten Vorbehandlungsschicht kann sehr dünn sein und beispielsweise lediglich zwischen 10 und 100 nm, insbesondere 20 und 50 nm betragen. Wegen ihrer geringen Schichtdicke trägt die Vorbehandlungsschicht nur unwesentlich zur Gesamtschichtdicke des Beschichtungsprozesses bei. Es wird davon ausgegangen, dass die Verwendung der Vorbehandlungsschicht keine Vergrößerung der Gesamtbeschichtungsdicke im Vergleich zu bisherigen Anwendungen erfordert. Daher ist zu erwarten, dass keine Verschlechterung des Wirkungsgrads der aus dem erfindungsgemäßen Elektroband hergestellten Elektrokerne gegenüber konventionellen Elektrokernen auftritt.

Nach dem Auftragen der Vorbehandlungsschicht und vor dem Beschichten mit der Backlackschicht kann eine aktive Trocknung der Vorbehandlungsschicht durch Energiezufuhr erfolgen. Die aktive Trocknung erfolgt durch zusätzliche Energiezufuhr beispielsweise in Form von Strahlung oder Konvektionswärme. Aufgrund der geringen Schichtdicke der Vorbehandlungsschicht kann eine relativ kurzzeitige und/oder energiearme Energiezufuhr ausreichend sein. Die aktive Trocknung erhöht die Prozesssicherheit des Beschichtungsverfahrens.

Beispielsweise wird die Vorbehandlungsschicht durch eine Rollenapplikation unter Verwendung einer ersten Rolle aufgetragen. Andere Aufbringungsverfahren, wie beispielsweise Druckverfahren oder Sprühverfahren, sind ebenfalls möglich.

Bei Verwendung einer bereits vorhandenen Beschichtungsanlage mit zwei im Inline-Prozess hintereinander geschalteten Beschichtungsstationen kann das Verfahren sehr kostengünstig im Herstellungswerk implementiert werden, indem die im Bandlauf erste Beschichtungsstation für die Beschichtung mit der Vorbehandlungsschicht umfunktioniert wird, während die Backlackschicht dann in der zweiten Beschichtungsstation lediglich mit einer einzigen Rollenapplikation aufgetragen wird. Gegebenenfalls muss lediglich die (erste) Trocknungsanlage zwischen den beiden Rollenapplikationen nachgerüstet werden.

Ein beschichtetes Elektroband weist ein gewalztes aluminiumlegiertes Elektroband sowie eine eine siliziumorganische Verbindung enthaltende Vorbehandlungsschicht über der Oberfläche des gewalzten aluminiumlegierten Elektrobandes und eine Backlackschicht über der Vorbehandlungsschicht auf. Ein solches beschichtetes Elektroband kann eine hohe Beschichtungsqualität in Bezug auf Nasshaftung und Kühlmittelbeständigkeit der Backlackschicht zeigen. Diese Vorteile können bei Verwendung von höher legierten Elektrobändern, die schlechtere Voraussetzungen für eine konventionelle gute Backlackanhaftung aber eine besondere Eignung für die vorliegende Erfindung bieten, besonders zum Tragen kommen.

Nachfolgend werden Ausführungsbeispiele und Weiterbildung in beispielhafter Weise anhand der schematischen Zeichnungen erläutert, wobei in den Zeichnungen teilweise ein unterschiedlicher Detaillierungsgrad verwendet wird. Gleiche Bezugszeichen bezeichnen dieselben oder ähnliche Teile.
Figur 1 zeigt in Längsschnittdarstellung einen beispielhaften Prozess des Auftragens einer Vorbehandlungsschicht und einer Backlackschicht über der Vorbehandlungsschicht auf einem Elektroband sowie Trocknungen der Schichten in Trocknungsanlagen.
Figur 2 veranschaulicht eine Hydrolyse der Oberfläche des Elektrobandes.
Figur 3 veranschaulicht die Wirkungsweise siliziumorganischer Verbindungen als molekulare Brücke zwischen der hydrolysierten Oberfläche des Elektrobandes und dem organischen Backlack vor und nach der Ausbildung kovalenter Bindungen.
Figur 4 zeigt in Längsschnittdarstellung beispielhaft einen oberflächennahen Ausschnitt aus einem Elektroband nach der Schichttrocknung.
Figur 5 zeigt in schematischer Darstellung eine Detailansicht aus Figur 4.
Figur 6 zeigt ein Coil aus einem beschichteten Elektroband gemäß einer Ausführungsform.
Figur 7 zeigt einen Elektroblechstapel, der aus übereinander gestapelten beschichteten Elektroblechlamellen aufgebaut ist.

Begriffe wie "Aufbringen" oder "Auftragen" sowie ähnliche Begriffe (z.B. "aufgebracht" bzw. "aufgetragen") sind in dieser Beschreibung im Allgemeinen nicht so zu verstehen, dass die aufgebrachten bzw. aufgetragenen Schichten einen direkten Kontakt zu der Oberfläche, auf der sie aufgebracht bzw. aufgetragen werden, aufweisen müssen. Es können dazwischenliegende Elemente oder Schichten zwischen den "aufgebrachten" oder "aufgetragenen", Elementen oder Schichten und der darunterliegenden Oberfläche vorhanden sein. Jedoch können die oben erwähnten oder ähnliche Begriffe in dieser Offenbarung auch die spezielle Bedeutung haben, dass die Elemente oder Schichten einen direkten Kontakt zu der darunterliegenden Oberfläche haben, d.h. dass keine dazwischenliegenden Elemente oder Schichten vorhanden sind.

Der Begriff "über", der in Bezug auf ein Element oder eine Materialschicht verwendet wird, das oder die "über" einer Oberfläche gebildet oder angebracht wird, kann hier in der Bedeutung verwendet werden, dass das Element oder die Materialschicht "indirekt auf" der Oberfläche angebracht wird, wobei zwischenliegende Elemente oder Schichten zwischen der Oberfläche und dem Element oder der Materialschicht vorhanden sein können. Jedoch kann der Begriff "über" auch die spezielle Bedeutung haben, dass das Element oder die Materialschicht, die "über" einer Oberfläche aufgebracht oder aufgetragen wird, "direkt auf", d.h. z.B. in direktem Kontakt mit der betreffenden Oberfläche angebracht wird. Das Gleiche gilt analog für ähnliche Begriffe wie z.B. "darüberliegend", "unter", "darunterliegend" usw.

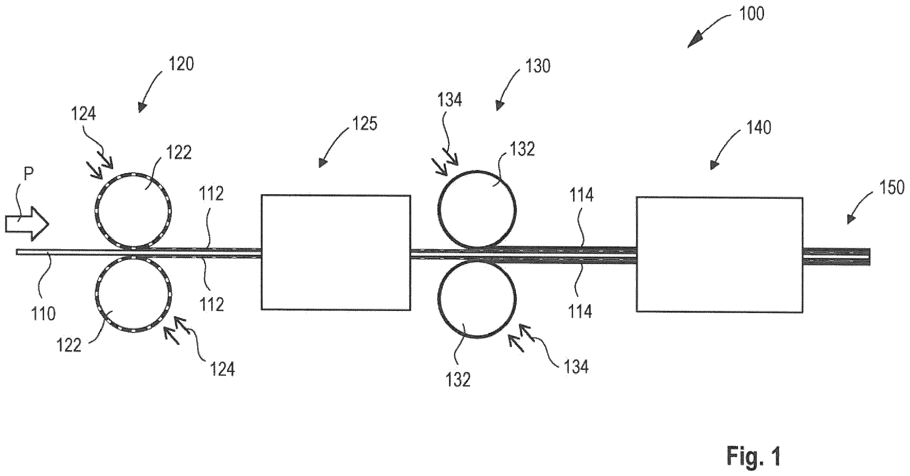

Figur 1 zeigt beispielhaft ein Verfahren zur Herstellung eines beschichteten Elektrobands 150 aus einem gewalzten, aluminiumlegierten Elektroband 110 in einer Bandbeschichtungsanlage 100. Das Elektroband 110 wird der Bandbeschichtungsanlage 100 im kontinuierlichen Bandlauf (siehe Pfeil P) zugeführt. Bei dem Elektroband 110 kann es sich beispielsweise um ein kaltgewalztes, nicht kornorientiertes Elektroblech im schlussgeglühten Zustand handeln (z.B. DIN EN 10106). Andere Elektrobleche, beispielsweise warmgewalzte und/oder nicht-schlussgeglühte Elektrobleche usw. sind ebenfalls möglich. Kaltgewalzte oder warmgewalzte Elektrobleche werden beispielsweise als Polbleche in Erregermaschinen und Generatoren oder in Transformatoren usw. eingesetzt.

Insbesondere zielt die Erfindung auf die Beschichtung hoch- oder höchstlegierter Elektrobänder ab, die beispielsweise einen Gesamtlegierungsanteil von gleich oder mehr als 4%wt aufweisen. Beispielsweise können solche Elektrobänder einen Siliziumanteil von gleich oder mehr als 3%wt und einen Aluminiumanteil von z.B. gleich oder mehr als 1%wt aufweisen.

Vor dem Auftragen der Vorbehandlungsschicht kann eine Reinigung des gewalzten Elektrobandes durch Waschen und/oder Bürsten oder andere mechanische und/oder chemische Reinigungsschritte erfolgen, um eine möglichst fremdkörperfreie, blanke Metalloberfläche zur Verfügung zu stellen.

Das der Bandbeschichtungsanlage 100 zugeführte Elektroband 110 kann beispielsweise in Form eines "endlosen" Metallbandes vorliegen, das gegebenenfalls von einem Coil (nicht dargestellt) in Pfeilrichtung P abgewickelt wird.

Die Bandbeschichtungsanlage 100 umfasst zumindest eine Vorbehandlungsstation 120 und eine Beschichtungsstation 130. Im Bandlaufweg zwischen der Vorbehandlungsstation 120 und der Beschichtungsstation 130 kann eine Vorbehandlungsschicht-Trocknungsanlage 125 vorgesehen sein. Ferner kann die Bandbeschichtungsanlage 100 eine Backlack-Trocknungsanlage, beispielsweise einen Trockeneinbrennofen 140, im Bandlaufweg hinter der zweiten Beschichtungsstation 130 aufweisen.

Die Beschichtungsanlage 100 ist in dem hier dargestellten Beispiel als beidseitige Beschichtungsanlage 100 ausgeführt. Es ist jedoch auch möglich, dass lediglich eine Flachseite des Elektrobandes 110 (beispielsweise die in Figur 1 dargestellte Oberseite) beschichtet wird. Insofern gelten sämtliche Angaben im Folgenden sowohl für den Fall einer einseitigen Beschichtung als auch für die dargestellte Möglichkeit, das Elektroband 110 auf beiden Flachseiten zu beschichten. Im zweiten Fall (beidseitige Beschichtung) können sämtliche Angaben zur Vorbehandlung, Beschichtung und Trocknung sowohl für die Prozessierung der Bandoberseite als auch für die Prozessierung der gegenüberliegenden Bandunterseite des Elektrobandes 110 gelten. Ferner kann auch eine beidseitige Vorbehandlung und Beschichtung mit unterschiedlichen Schichten auf den beiden Bandseiten vorgenommen werden.

Das gewalzte aluminiumlegierte Elektroband 110 kann einen Al-Anteil von gleich oder mehr als 0,5%wt, 1,0%wt, 1,1%wt oder 1, 3%wt und gleich oder weniger als 2, 0%wt oder 2, 5%wt aufweisen.

Insbesondere kann das gewalzte aluminiumlegierte Elektroband 110 einen Si-Anteil von gleich oder mehr als 0,5%wt, 1,5%wt, 1,7%wt oder 1,8%wt und gleich oder weniger als 2,4%wt oder 2,8%wt aufweisen.

Der Gesamtlegierungsanteil (von Si und Al, gegebenenfalls einschließlich weiterer Legierungselemente) kann gleich oder mehr als 1,0%wt, 2,0%wt, 3,0%wt oder 3,5%wt und gleich oder weniger als 3,7%wt, 3,8%wt, 4,0%wt oder 5,0%wt betragen. Insbesondere können auch höchstlegierte Güten als Elektroband 110 verwendet werden, die üblicherweise eine relativ schlechte Backlackanhaftung zeigen.

Das Elektroband 110 kann ein Stahlband mit insbesondere der folgenden Zusammensetzung sein (alle Angaben in %wt):
C: 0,0010 - 0,02
Si: 0,5 - 4,0
Mn: 0,1 - 0,5
P: 0,01 - 0,02
S: 0,0001 - 0,005
Al: 0,5 - 2,5
N: < 0,005
Nb: < 0,5
Ti: < 0,5
B: < 0,0020
Cr: < 0,10
Cu: < 0,10
V: < 0,10
Sn: < 0,10
Mo: < 0,10
Rest Eisen und unvermeidbare Verunreinigungen.

Bevorzugte Bereiche, die einzeln oder in Kombination beim Elektroband 110 eingesetzt werden können, sind:
C: 0,0020 - 0,0050
Si: 2,0 - 3,0 (spezieller Bereich: 2,27 - 2,37)
Mn: 0,25 - 0,3
P: 0,01 - 0,02
S: 0,0001 - 0,005
Al: 0,8 - 1,3 (spezieller Bereich: 1,0 - 1,1)
N: < 0,005
Nb: < 0,1
Ti: < 0,1
B: < 0,0020
Cr: < 0,05 (spezieller Bereich: < 0,05)
Cu: < 0,05
V: < 0,05
Sn: < 0,05
Mo: < 0,05
Rest Eisen und unvermeidbare Verunreinigungen.

Im Folgenden wird ein Beispiel für ein Elektroband angegeben. Die Werte wurden durch eine chemische Analyse erhalten:
Beispiel: Elektroband
C: 0,0038
Si: 2,3
Mn: 0,28
P: 0,013
S: 0,0008
Al: 1,00
N: 0,001
Rest Eisen und unvermeidbare Verunreinigungen.

Im Folgenden wird ein Beispiel für die Kombination von Güte und Glühparametern eines Elektrobandes angegeben. Dem Beispiel sind ferner mögliche Bereiche der genannten Größen in Klammern hinzugefügt.

### Güte

| | |
|---|---|
| Al: 1.0%wt | (Bereich: 0,5 - 2,5%wt) |
| Si: 2.3%wt | (Bereich: 0,5 - 4,0%wt) |

### Glühung

| | |
|---|---|
| Glühendtemperatur T = 1.000°C | (Bereich: 800 - 1200°C, bevorzugt 920 - 1150°C) |
| Glühdauer t = 2 min | (Bereich: 0,5 - 5 min) |
| Taupunkt = -45°C | (Bereich: -35 - -60°C) |

Das unbeschichtete und gegebenenfalls chemisch und/oder mechanisch gereinigte Elektroband 110 wird in der Vorbehandlungsstation 120 mit einer Vorbehandlungsschicht 112 überzogen. Die Beschichtung kann vollflächig erfolgen, d.h. die Vorbehandlungsschicht 112 kann die Oberfläche des Elektrobandes 110 vollständig abdecken. Die Vorbehandlungsschicht 112 kann direkt auf die Stahloberfläche des Elektrobandes 110 aufgetragen werden.

Die Vorbehandlungsschicht 112 kann durch eine Rolle bzw. Walze 122 (bzw. ein Rollen- oder Walzenpaar 122) auf die obere Flachseite (bzw. auch auf die gegenüberliegende untere Flachseite) des Elektrobandes 110 aufgetragen werden. Bei einer Rollenapplikation läuft die Rolle 122 auf dem sich bewegenden Elektroband 110 ab und lagert dabei eine flüssige Vorbehandlungssubstanz 124, die zuvor auf die Rolle 122 aufbracht wurde, in Form eines dünnen Films auf der Oberfläche des Elektrobandes 110 ab. Dabei lässt sich die Schichtdicke der nassen Vorbehandlungsschicht 112 durch die Parameter der Rollenapplikation einstellen. Die Nassfilmdicke der Vorbehandlungsschicht 112 vor der Trocknung kann im Bereich von 1 bis 10 µm, bevorzugt 2 bis 4 µm liegen. Bei einer höheren Schichtdicke wird die Lösung stärker verdünnt und kann daher homogener verteilt vorliegen, während bei einer dünneren Schichtdicke die einzelnen Bestandteile der Vorbehandlungsschicht 112 im Nassfilm weniger stark verdünnt vorliegen und daher exakter dosiert werden können.

Die Vorbehandlungsbeschichtung 112 dient dazu, die Nasshaftung des Backlacks 134 auf dem Elektroband 110 zu steigern. Generell zeigen legierte Elektrobänder 110 eine erhöhte Bildung von Aluminium- und/Siliziumoxiden an der Oberfläche, welche die Haftung der Backlackschicht 114 auf dem Elektroband 110 negativ beeinflusst. Durch die Vorbehandlungsschicht 112 wird der Backlackschicht 114 ein verbesserter Haftgrund geboten. Hierfür macht man sich die (an sich für eine gute Haftung nachteilige) bandoberflächennahe Anreicherung von Aluminium zunutze, indem man die Bildung von Aluminiumoxid hemmt, die Bildung von Aluminiumnitrid fördert und durch die Kombination von Hydrolysieren der Oberfläche des Elektrobandes 110 und Verwenden einer siliziumorganischen Verbindung in der Vorbehandlungssubstanz 124 einen speziell für eine verbesserte Nasshaftung geeigneten Untergrund für die Backlackschicht 114 schafft.

Die Vorbehandlungsschicht 112 kann relativ dünn sein und getrocknet etwa 10 nm bis 100 nm Dicke aufweisen. Insbesondere sind Dicken unter 50 nm einstellbar und ermöglichen bereits eine deutliche Verbesserung der Lackanhaftung.

Nach der Aufbringung der Vorbehandlungsschicht 112 auf eine oder beide Seiten des Elektrobandes 110 läuft das vorbehandelte Elektroband 110 durch die (optionale) Vorbehandlungsschicht-Trocknungsanlage 125. Diese kann als Durchlauf-Trocknungsanlage ausgelegt sein, die das Elektroband 110 bzw. die darauf befindliche Vorbehandlungsschicht 112 auf relativ niedrige Temperaturen im Bereich von beispielsweise 40°C bis 50°C (z.B. etwa 45°C) erwärmt. D.h., es handelt sich bei der gezielten, aktiven Trocknung lediglich um ein "Ablüften" oder "Antrocknen" der Vorbehandlungsschicht 112. Es hat sich gezeigt, dass sich durch das Ablüften bzw. Antrocknen der Vorbehandlungsschicht 112 die Prozesssicherheit des Beschichtungsverfahrens signifikant erhöhen lässt.

Anschließend tritt das vorbeschichtete Elektroband 110 in die Beschichtungsstation 130 ein. In der Beschichtungsstation 130 wird z.B. durch eine Rolle 132 (bzw. ein Rollenpaar 132) die nasse Backlackschicht 114 auf die Vorbehandlungsschicht 112 aufgebracht. Die Schichtdicke (gemessen nach der Trocknung) ist durch Parameter der Rollenapplikation relativ genau einstellbar. Auch die Backlackbeschichtung 114 kann vollflächig erfolgen, d.h. die Oberfläche der Vorbehandlungsschicht 112 vollständig abdecken.

Eine Backlackschicht ist eine thermohärtbare wasserbasierte Schmelzklebelackschicht, welche beispielsweise ein Epoxidharz oder eine Epoxidharzmischung und mindestens einen latenten Härter wie beispielsweise Dicyandiamid aufweist. Ein Härter macht aus einem Thermoplasten einen Duroplasten. Die Backlackschicht ermöglicht das Verbacken von aus dem Elektroband herausgeschnittenen Elektrobandlamellen zu einem formstabilen Elektrokern.

Der Backlack 134 kann ein trockenes Verkleben der Elektroblechlamellen im Elektrokern ohne zusätzliche Verbindungsmittel (wie beispielsweise Schweißverbindungen) ermöglichen.

Es können beispielsweise Backlacke der Isolierstoffklassen C3/EC-3, C4/EC-4, C5/EC-5 oder C6/EC-6 Verwendung finden.

Backlacke 134 der Isolierstoffklasse C3/EC-3 sind ungefüllte Lacke auf organischer Basis, die rein organische Bestandteile enthalten können und zum Isolieren von Elektroblechlamellen dienen, die keinem weiteren Glühprozess unterworfen werden. Diese Lacke weisen hervorragende Stanzeigenschaften auf.

Backlacke 134 der Isolierstoffklasse C4/EC-4 sind anorganische Isolierbeschichtungen, die glühbeständig sind und gute Schweißeigenschaften aufweisen. Diese anorganischen, wasserverdünnbaren Backlacke vermeiden das Zusammenkleben von Elektroblechen beim Glühen.

Backlacke 134 der Isolierstoffklasse C5/EC-5 sind ungefüllte Lacke auf organischer oder anorganischer Basis für Anwendungen, die höhere Isoliereigenschaften, Hitzebeständigkeit und gegebenenfalls verbesserte Schweißbarkeit erfordern.

Backlacke 134 der Isolierstoffklasse C6/EC-6 sind gefüllte Lacke auf organischer oder anorganischer Basis, die nochmals verbesserte Isoliereigenschaften und erhöhte Druckfestigkeiten bieten. Diese Lacke basieren auf thermisch stabilen, organischen Polymeren mit einem hohen Anteil an anorganischen Füllstoffen. Sie werden insbesondere eingesetzt für große Elektrokerne mit hoher Druck- und Temperaturbelastung.

Die Backlackschicht 114 kann direkt auf eine Oberfläche der zuvor applizierten Vorbehandlungsschicht 112 aufgetragen werden.

Beispielsweise kann die Schichtdicke der Backlackschicht 114 zwischen 1 und 12 µm betragen. Die Schichtdicke der Backlackschicht 114 kann insbesondere gleich oder kleiner als 6 µm, 4 µm, 2 µm oder 1 µm sein.

Bei der beidseitig unterschiedlichen Beschichtung kann beispielsweise auf der Unterseite des Elektrobandes 110 eine andere Backlackschicht 114 als auf der Oberseite aufgebracht werden. Beispielsweise kann auf der Unterseite (Oberseite) eine Backlackschicht und auf der Oberseite (Unterseite) eine Isolierlackschicht ohne Klebeeigenschaften aufgebracht werden.

Die Vorbehandlungsstation 120 und die Beschichtungsstation 130 können räumlich und - bezogen auf die Bandlaufgeschwindigkeit - zeitlich in geringem Abstand voneinander angeordnet sein. Beispielsweise kann vorgesehen sein, dass der räumliche Abstand zwischen der Vorbehandlungsstation 120 und der zweiten Beschichtungsstation 130 (d.h. beispielsweise der Abstand zwischen den Achsen der Rollen 122 und 132) gleich oder kleiner als 10 m, 8 m, 6 m, 5 m oder 4 m ist. Die Zeitdauer zwischen der Aufbringung der Vorbehandlungsschicht 112 in der Vorbehandlungsstation 120 und der Aufbringung der Backlackschicht 114 in der Beschichtungsstation 130 kann gleich oder kleiner als 20 s, 15 s, 10 s, 5 s oder 3 s sein. Übliche Bandlaufgeschwindigkeiten können beispielsweise im Bereich von 100 m/min liegen, wobei dieser Wert beispielsweise um ±10%, ± 20%, ±30%, ±40% oder ±50% variieren kann.

Im Bandlaufweg hinter der Beschichtungsstation 130 befindet sich beispielsweise der Trockenofen 140. Der zeitliche und räumliche Abstand zwischen der zweiten Beschichtungsstation 130 und dem Eintritt in den Trockenofen 140 kann beispielsweise dieselben Werte aufweisen, die vorstehend für den zeitlichen und räumlichen Abstand zwischen der Vorbehandlungsstation 120 und der Beschichtungsstation 130 genannt wurden.

In dem Trockenofen 140 erfolgt eine Trocknung der Backlackschicht 114. Der Trockenofen 140 kann hierfür als Durchlauftrockenofen (Tunnelofen) ausgelegt sein, der von dem beschichteten Elektroband 110 kontinuierlich durchlaufen wird. Beispielsweise kann die maximale Temperatur des Elektrobandes 110 im Trockenofen 140 zwischen 150°C und 300°C betragen, wobei insbesondere Temperaturwerte gleich oder größer als 170°C, 180°C, 190°C, 200°C, 210°C, 220°C oder 230°C und/oder gleich oder kleiner als 250°C, 220°C, 210°C, 200°C oder 190°C vorgesehen sein können.

Die Dauer der Wärmebehandlung in dem Trockenofen 140 kann beispielsweise zwischen 10 s und 40 s betragen und insbesondere kleiner, gleich oder größer als 20 s oder 30 s sein. Andere Temperaturen und Wärmebehandlungszeitdauern sind ebenfalls möglich.

Im Trockenofen 140 bildet sich zwischen der Vorbehandlungsschicht 112 und der Backlackschicht 114 eine chemische Bindung (kovalente Bindung) aus, wie im Folgenden noch näher beschrieben wird. Hierdurch wird die Haftung erhöht. Die Backlackschicht 114 wird zumindest soweit getrocknet, dass sie im Bandlaufweg ausgangsseitig des Trockenofens 140 mechanisch stabil und abriebfest mit dem Elektroband 110 verbunden ist. Dies ermöglicht dann das weitere Handling des getrockneten, beschichteten Elektrobandes 150 im Bandlauf hinter dem Trockenofen 140 beispielsweise durch Umlenkrollen oder durch Aufwickeln zu einem Coil (in Figur 1 nicht dargestellt).

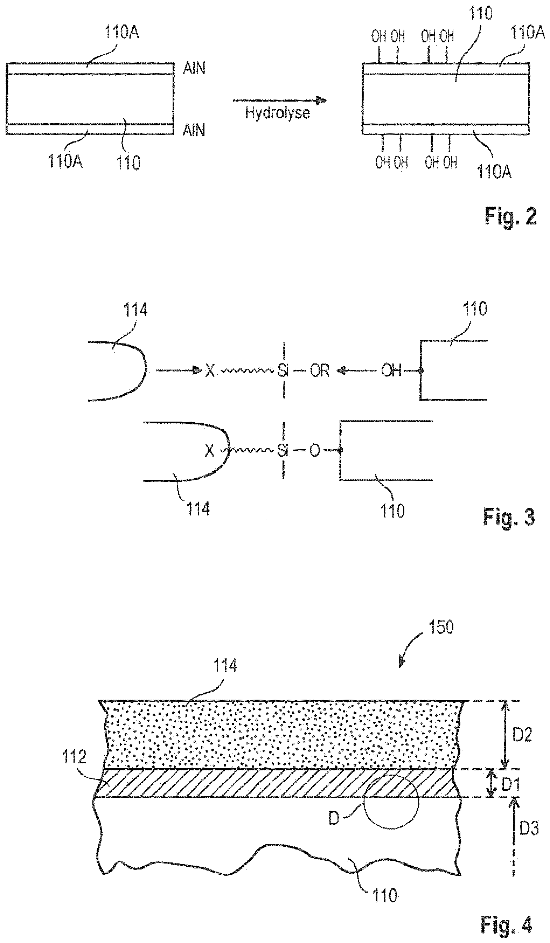

Figur 2 zeigt in schematischer Darstellung eine (zumindest partielle) Hydrolyse der Oberfläche des Elektrobandes 110.

Wie bereits erwähnt befindet sich bei einem legierten Elektroband 110 an dessen Oberfläche ein (vergrößert dargestellter) Bereich 110A, in welchem sich eine Anreicherung der Legierungsbestandteile, im vorliegenden Fall insbesondere von Aluminium, einstellt. Um eine hydrolysierbare Oberfläche des Elektrobandes 110 zu schaffen ist es erforderlich, dort eine Bildung von Aluminiumoxyd möglichst weitgehend zu unterbinden und stattdessen AlN in der Oberflächenschicht 110A bereitzustellen. Bei ausreichend tiefem Taupunkt (z.B. ≤ -45°C) und einer relativ hohen Glühendtemperatur (z.B. gleich oder größer als 1000°C oder 1100°C) kann erreicht werden, dass der Stickstoff aus der Luft dissoziiert und mit dem Aluminium in der Oberflächenschicht 110A die Verbindung AlN bildet. Auf diese Weise wird die im linken Teil der Figur 2 dargestellte oberflächennahe AlN-haltige Oberflächenschicht 110A bereitgestellt.

Die Hydrolyse der AlN-haltigen Oberflächenschicht 110A des Elektrobandes 110 erzeugt dann die Hydroxygruppe (-OH) auf der Metalloberfläche des Elektrobands 110, siehe den rechten Teil der Figur 2. Die Hydrolyse erfolgt vorzugsweise vollflächig und "deckend" über die gesamte Metalloberfläche. Es ist aber nicht erforderlich, dass jede AlN-Verbindung hydrolysiert wird, insbesondere wenn sie nicht direkt an die Oberfläche angrenzt. D.h., auch eine teilweise oder überwiegende Hydrolysierung kann gegebenenfalls eine ausreichend hohe Oberflächenbedeckung mit Hydroxygruppen herbeiführen.

Die Hydrolyse des Elektrobandes 110 kann vor der Beschichtung mit der Vorbehandlungsschicht 112 oder auch noch im Zeitfenster zwischen der Auftragung der Vorbehandlungsschicht 112 und der Trocknung in der Vorbehandlungsschicht-Trocknungsanlage 125 erfolgen.

Je nach AlN-Gehalt der AlN-haltigen Oberflächenschicht 110A kann es möglich sein, allein durch die Luftfeuchtigkeit eine ausreichend hydrolysierte Oberfläche des Elektrobands 110 bereitzustellen. Die Hydrolyse kann aber auch gezielt durch Anwendung einer geeigneten Substanz auf die Bandoberfläche herbeigeführt werden. Eine erste Möglichkeit besteht darin, die Substanz (z.B. eine schwach alkalische Lösung, aber auch im sauren Milieu ist eine Hydrolyse möglich) im Bandlauf vor der Vorbehandlungsstation 120 auf das Elektroband 110 aufzubringen. Eine zweite Möglichkeit besteht darin, die Hydrolyse quasi gleichzeitig mit der Abscheidungsreaktion im Zeitfenster zwischen der Auftragung der Vorbehandlungsschicht 112 und der Schichttrocknung in der Vorbehandlungsschicht-Trocknungsanlage 125 "in-situ" durchzuführen.

Figur 3 erläutert die Wirkungsweise einer siliziumorganischen Verbindung als molekulare Brücke zwischen der hydrolysierten Oberflächenschicht 110A des Elektrobandes 110 und dem organischen Backlack 114.

In Figur 3 bezeichnet R eine hydrolysierbare, funktionelle Gruppe (z.B. Alkoxygruppe), die für eine Reaktion mit dem hydrolysierten metallischen Elektroband 110 zur Verfügung steht. X bezeichnet eine im Allgemeinen nicht hydrolysierbare, organofunktionelle Gruppe, die die chemische Anbindung der siliziumorganischen Verbindung an den Backlack 114 ermöglicht. Zwischen dem Siliziumatom und der organofunktionellen Gruppe X befindet sich eine Kohlenstoffkette variabler Ausbildung und Länge. Bei der Kohlenstoffkette kann es sich z.B. um Ethergruppen - ein Sauerstoffatom, das mit zwei Organylresten substituiert ist - oder um andere organische Ketten handeln.

Im unteren Teil der Figur 3 ist die Brückenfunktion der siliziumorganischen Verbindung dargestellt. Wie bereits erwähnt reagiert die siliziumorganische Verbindung mit den Hydroxygruppen auf der Metalloberfläche, so dass sich dort kovalente Si-O-Bindungen ausbilden. Diese Abscheidungsreaktion wird auch als Hydrolyse-Kondensation bezeichnet. Die Si-O-Bindung weist eine hohe chemische und thermische Stabilität auf, wodurch die Verbindung weitgehend inert gegen chemische und mediale Einflüsse aus der Umgebung ist. Dies ist eine Ursache für die erhöhte Nasshaftung.

Es ist davon auszugehen, dass die Abscheidungsreaktion rasch abläuft, d.h. bereits beim Auftragen der siliziumorganischen Verbindung (die in der Vorbehandlungsschicht enthalten ist) startet und insbesondere bei der aktiven Trocknung stattfindet, welche dann die Prozesssicherheit erhöht.

Zwischen dem Backlack 114 und der siliziumorganischen Verbindung entsteht ebenfalls eine kovalente Bindung. Durch eine gezielte Auswahl der organofunktionellen Gruppe X (beispielsweise Aminogruppen oder Epoxygruppen) wird erreicht, dass die siliziumorganische Verbindung exzellent mit dem Backlack 114 kovalente Bindungen eingehen kann (siehe Figur 3, unterer Teil).

Zur Herstellung einer Vorbehandlungssubstanz 124 können beispielsweise die folgenden Bestandteile in den im Folgenden angegebenen Mengenbereichen miteinander vermengt werden:

| | |
|---|---|
| Organosilan (z.B. GLYMO): | 0,5-3,0%wt |
| Filmbildner (z.B. Phenoxydispersion) | 0,0-2,0%wt |
| Co-Solvens (z.B. Butylglycol): | 0,2-2, 0%wt |
| Tensid (z.B. Ligaphob N90): | 0,02-0,3%wt |
| Rest: | organisches oder anorganisches Lösungsmittel |

| | |
|---|---|
| Bevorzugte Mengebereiche: | |
| Organosilan (z.B. GLYMO): | 1,0-2,5%wt |
| Filmbildner (z.B. Phenoxydispersion) | 0,0-1,5%wt |
| Co-Solvens (z.B. Butylglycol): | 0,5-1, 3%wt |
| Tensid (z.B. Ligaphob N90): | 0,05-0,22%wt |
| Rest: | organisches oder anorganisches Lösungsmittel |

### Zusammensetzungsbeispiele

### Beispiel 1: mit Filmbildner (Harz):

| Komponente: | %wt |
|---|---|
| GLYMO (3-Glycidyloxypropyltrimethoxysilan) | 2,0 |
| PKHW-34 (Phenoxydispersion) | 1,0 |
| Butylglycol (Co-Solvens) | 1,0 |
| Ligaphob N90 (Tensid) | 0,2 |
| Wasser | 95,8 |

### Beispiel 2: ohne Filmbildner (Harz):

| Komponente: | %wt |
|---|---|
| GLYMO (3-Glycidyloxypropyltrimethoxysilan) | 2,0 |
| Butylglycol (Co-Solvens) | 1,0 |
| Ligaphob N90 (Tensid) | 0,2 |
| Wasser | 96,8 |

Die Vorbehandlungssubstanz 124 kann insbesondere frei von jeglichem Härter oder Backlack sein.

Figur 4 zeigt in Längsschnittansicht in vereinfachter Darstellung einen oberflächennahen Ausschnitt des beschichteten Elektrobandes 110 im Bereich hinter dem Trockenofen 140. Schichtdickenschwankungen sind nicht dargestellt. Die Querschnittsansicht kann identisch mit der gezeigten Längsschnittansicht sein.

Die (trockene) Vorbehandlungsschicht 112 weist eine Dicke D1 auf und die (trockene) Backlackschicht 114 weist eine Dicke D2 auf. Die Schichtdicke D1 kann beispielsweise um gleich oder mehr als den Faktor 10, 25 oder 50 kleiner als die Schichtdicke D2 sein. Beispielsweise kann die Schichtdicke D2 gleich oder größer oder kleiner als 2 µm, 3 µm, 4 µm, 5 µm, 6 µm, 7 µm, 8 µm, 9 µm, 10 µm, 11 µm oder 12 µm sein. Die Blechdicke D3 des Elektrobandes 110 kann beispielsweise gleich oder kleiner als 0,5 mm, 0,4 mm, 0,35 mm oder 0,3 mm sein.

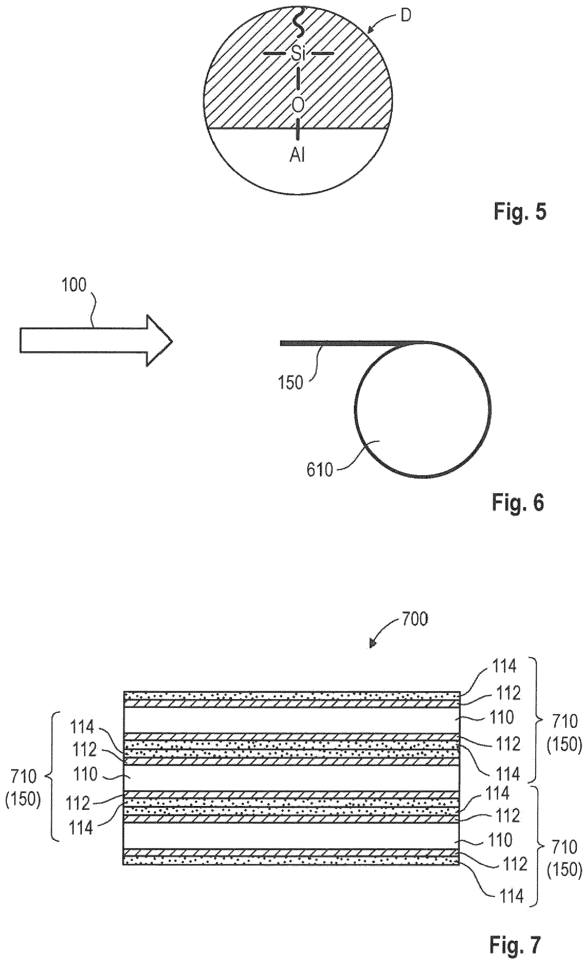

Figur 5 zeigt in schematischer Darstellung ein Detail D aus Figur 4. Im Bereich der Oberfläche des Elektrobandes 110 ist eine kovalente Si-O-Bindung dargestellt, die an ein oberflächennahes Aluminiumatom in dem Elektroband 110 anbindet.

Figur 6 veranschaulicht ein Coil (Wickel) 610 des beschichteten Elektrobandes 150, wie es ausgangsseitig der Bandbeschichtungsanlage 100 aufgewickelt werden kann. Das Coil 610 kann beispielsweise zum Kunden ausgeliefert und dort zum Elektrokern (gegebenenfalls mit integrierten Kühlkanälen) weiterverarbeitet werden.

Figur 7 zeigt in schematischer Ansicht einen Ausschnitt aus einem Elektrokern 700, der durch Stapeln von Elektroblechen 710, die durch Querteilung des beschichteten Elektrobandes 150 erhalten werden, realisiert ist.

Üblicherweise werden die Elektrobleche 710 vor dem Stapeln durch einen Formzuschnitt in ihre Endform gebracht, beispielsweise durch Stanzen oder Laserschneiden.

Der Blechstapel wird durch Aushärtung der Backlackschichten 114 zum formstabilen Elektrokern 700 verfestigt. Der Verfestigungsmechanismus beruht auf einer chemischen Reaktion, üblicherweise einem dreidimensionalen Vernetzen des Klebstoffes in der Backlackschicht 114. Das Aushärten des Backlackes kann durch eine Verspannung der geschichteten Elektrobleche 710 und einer Erwärmung des Schichtstapels beispielsweise in einem Ofen erfolgen.

In dem hier dargestellten Beispiel ist ein Elektrokern 700 dargestellt, der aus einem beidseitig beschichteten Elektroblech 710 hergestellt ist. Wie bereits erwähnt können auch einseitig beschichtete Elektrobleche 710 oder beidseitig unterschiedlich beschichtete Elektrobleche 710 verwendet werden, wodurch gegebenenfalls höhere Stapelfaktoren erreichbar werden. Die Figur 7 ist aufgrund zu großer Dicken der Vorbehandlungsschichten 112 nicht maßstäblich.

Insbesondere kann vorgesehen sein, derartige Elektrokerne 700 mit Kühlkanälen in dem geklebten Lamellenpaket auszurüsten. Aufgrund der hier beschriebenen Maßnahmen ist die Gefahr einer Korrosion durch Unterwanderung der Backlackschichten 114 durch Feuchtigkeit deutlich verringert bzw. es können auch höher- und höchstlegierte Elektrobänder für Kühlanwendungen eingesetzt werden.

## Patentansprüche

1. Verfahren zur Herstellung eines beschichteten Elektrobands, umfassend:
Hydrolysieren einer Oberfläche eines gewalzten aluminiumlegierten Elektrobandes;
Auftragen einer Vorbehandlungsschicht über der Oberfläche des gewalzten aluminiumlegierten Elektrobandes, die eine siliziumorganische Verbindung enthält; und
Beschichten des mit der Vorbehandlungsschicht überzogenen gewalzten aluminiumlegierten Elektrobandes mit einer Backlackschicht.

2. Verfahren nach Anspruch 1, wobei die siliziumorganische Verbindung ein Organosilan ist.

3. Verfahren nach Anspruch 1, wobei die siliziumorganische Verbindung ein Organosilanol ist.

4. Verfahren nach Anspruch 1, wobei die siliziumorganische Verbindung ein Siloxan oder ein Silikon ist.

5. Verfahren nach einem der vorhergehenden Ansprüche, wobei die siliziumorganische Verbindung eine erste funktionelle Gruppe und eine zweite funktionelle Gruppe enthält, wobei die erste funktionelle Gruppe eine kovalente Bindung mit der hydrolysierten Oberfläche ausbildet und die zweite funktionelle Gruppe eine kovalente Bindung mit dem Backlack eingeht.

6. Verfahren nach Anspruch 5, wobei die erste funktionelle Gruppe eine Alkoxygruppe ist.

7. Verfahren nach Anspruch 5 oder 6, wobei die kovalente Bindung der ersten funktionellen Gruppe eine Si-O Bindung ist.

8. Verfahren nach Anspruch 5 oder 6, wobei die zweite funktionelle Gruppe eine Aminogruppe oder eine Epoxygruppe ist.

9. Verfahren nach einem der vorhergehenden Ansprüche, wobei vor dem Hydrolysieren ein Glühen des Elektrobandes erfolgt, wobei beim Glühen des Elektrobandes der Taupunkt im Bereich von -35°C bis -60°C eingestellt wird.

10. Verfahren nach einem der vorhergehenden Ansprüche, wobei vor dem Hydrolysieren ein Glühen des Elektrobandes erfolgt, wobei eine Glühendtemperatur im Bereich von 1000°C bis 1200°C eingestellt wird.

11. Verfahren nach einem der vorhergehenden Ansprüche, wobei die Vorbehandlungsschicht aus einer Zusammensetzung enthaltend 0,5%wt bis 3,0%wt Organosilan, 0,2%wt bis 2,0%wt Co-Solvens, 0,02%wt bis 0,3%wt Tensid, der Rest ein organisches oder anorganisches Lösungsmittel und/oder Wasser hergestellt ist.

12. Verfahren nach einem der vorhergehenden Ansprüche, wobei die Schichtdicke der getrockneten Vorbehandlungsschicht zwischen 10 und 100 nm, insbesondere 20 und 50 nm beträgt.

13. Verfahren nach einem der vorhergehenden Ansprüche, wobei nach dem Auftragen der Vorbehandlungsschicht und vor dem Beschichten mit der Backlackschicht eine aktive Trocknung der Vorbehandlungsschicht durch Energiezufuhr erfolgt.

14. Beschichtetes Elektroband, das aufweist:
ein gewalztes aluminiumlegiertes Elektroband;
eine eine siliziumorganische Verbindung enthaltende Vorbehandlungsschicht über der Oberfläche des gewalzten aluminiumlegierten Elektrobandes; und
eine Backlackschicht über der Vorbehandlungsschicht.

15. Beschichtetes Elektroband nach Anspruch 14, wobei die siliziumorganische Verbindung ein Organosilan, Organosilanol, Siloxan oder ein Silikon ist.

## Claims

1. A method of producing a coated electrical strip, comprising:
hydrolyzing a surface of a rolled aluminum-alloyed electrical strip;
applying a pretreatment layer over the surface of the rolled aluminum-alloyed electrical strip, the pretreatment layer comprises an organosilicon compound; and
coating of the rolled aluminum-alloyed electrical strip coated with the pretreatment layer with a baking varnish layer.

2. The method of claim 1, wherein the organosilicon compound is an organosilane.

3. The method of claim 1, wherein the organosilicon compound is an organosilanol.

4. The method of claim 1, wherein the organosilicon compound is a siloxane or a silicone.

5. The method of any of the preceding claims, wherein the organosilicon compound comprises a first functional group and a second functional group, wherein the first functional group forms a covalent bond with the hydrolyzed surface and the second functional group forms a covalent bond with the baking varnish.

6. The method of claim 5, wherein the first functional group is an alkoxy group.

7. The method of claim 5 or 6, wherein the covalent bond of the first functional group is a Si-O bond.

8. The method of claim 5 or 6, wherein the second functional group is an amino group or an epoxy group.

9. The method of any of the preceding claims, wherein an annealing of the electrical strip is carried out prior to the hydrolyzing, wherein the dew point is set in the range of -35°C to -60°C during the annealing of the electrical strip.

10. The method of any of the preceding claims, wherein an annealing of the electrical strip is carried out prior to the hydrolyzing, wherein an annealing end temperature in the range of 1000°C to 1200°C is set.

11. The method of any of the preceding claims, wherein the pretreatment layer is prepared from a composition containing 0.5%wt to 3.0%wt organosilane, 0.2%wt to 2.0%wt co-solvent, 0. 02%wt to 0.3%wt surfactant, the balance an organic or inorganic solvent and/or water.

12. The method of any of the preceding claims, wherein the layer thickness of the dried pretreatment layer is between 10 and 100 nm, in particular 20 and 50 nm.

13. The method of any of the preceding claims, wherein, after application of the pretreatment layer and before coating with the baking varnish layer, active drying of the pretreatment layer is carried out by supplying energy.

14. A coated electrical strip, comprising:
a rolled aluminum-alloyed electrical strip;
a pretreatment layer comprising an organosilicon compound over the surface of the rolled aluminum-alloyed electrical strip; and
a baking varnish layer over the pretreatment layer.

15. The coated electrical strip of claim 14, wherein the organosilicon compound is an organosilane, organosilanol, siloxane or a silicone.

## Revendications

1. Procédé de fabrication d'une tôle magnétique revêtue, comprenant :
l'hydrolyse d'une surface d'une tôle magnétique laminée alliée à l'aluminium ;
application d'une couche de prétraitement sur la surface de la tôle magnétique laminée alliée à l'aluminium, qui contient un composé organique du silicium ; et
application d'une couche de vernis de liaison sur la tôle magnétique laminée, alliée à l'aluminium, revêtue de la couche de prétraitement.

2. Procédé selon la revendication 1, dans lequel le composé organique du silicium est un organosilane.

3. Procédé selon la revendication 1, dans lequel le composé organique du silicium est un organosilanol.

4. Procédé selon la revendication 1, dans lequel le composé organique du silicium est un siloxane ou une silicone.

5. Procédé selon l'une des revendications précédentes, dans lequel le composé organique du silicium contient un premier groupe fonctionnel et un deuxième groupe fonctionnel, le premier groupe fonctionnel formant une liaison covalente avec la surface hydrolysée et le deuxième groupe fonctionnel subissant une liaison covalente avec le vernis de liaison.

6. Procédé selon la revendication 5, dans lequel le premier groupe fonctionnel est un groupe alcoxy.

7. Procédé selon la revendication 5 ou 6, dans lequel la liaison covalente du premier groupe fonctionnel est une liaison Si-O.

8. Procédé selon la revendication 5 ou 6, dans lequel le deuxième groupe fonctionnel est un groupe amino ou un groupe époxy.

9. Procédé selon l'une des revendications précédentes, dans lequel on procède avant l'hydrolyse à un recuit de la tôle magnétique, le point de rosée étant ajusté dans la plage de -35 °C à -60 °C lors du recuit de la tôle magnétique.

10. Procédé selon l'une des revendications précédentes, dans lequel on procède avant l'hydrolyse à un recuit de la tôle magnétique, la température finale de recuit étant ajustée dans la plage de 1 000 °C à 1 200 °C.

11. Procédé selon l'une des revendications précédentes, dans lequel la couche de prétraitement est fabriquée à partir d'une composition contenant 0,5 % en poids à 3,0 % en poids d'un organosilane, 0,2 % en poids à 2,0 % en poids d'un co-solvant, 0,02 % en poids à 0,3 % en poids d'un tensioactif, le reste étant constitué d'un solvant organique ou inorganique et/ou d'eau.

12. Procédé selon l'une des revendications précédentes, dans lequel l'épaisseur de la couche de prétraitement séchée est comprise entre 10 et 100 nm, en particulier entre 20 et 50 nm.

13. Procédé selon l'une des revendications précédentes, dans lequel on procède à un séchage actif de la couche de prétraitement par apport d'énergie avant l'application de la couche de prétraitement et avant le recouvrement avec une couche de vernis de liaison.

14. Tôle magnétique revêtue qui comprend :
une tôle magnétique laminée alliée à l'aluminium ;
une couche de prétraitement, contenant un composé organique du silicium, par-dessus la surface de la tôle magnétique laminée alliée à l'aluminium ; et
une couche de vernis de liaison par-dessus la couche de prétraitement.

15. Tôle magnétique revêtue selon la revendication 14, dans laquelle le composé organique du silicium est un organosilane, un organosilanol, un siloxane ou une silicone.
